# EUROPEAN PATENT APPLICATION

(11) **EP 3 428 794 A1**
(43) Date of publication of application: **16.01.2019**
(21) Application number: 17868406.4
(22) Date of filing: 13.04.2017
(51) Int. Cl.: G06F 9/44

(54) **METHOD AND TERMINAL FOR LOADING MEDIA RESOURCE**

(30) Priority: 01.11.2016 CN 201610942691
(71) Applicant: Huawei Technologies Co., Ltd., Longgang District Shenzhen, Guangdong 518129 (CN)
(72) Inventor: SHEN, Huihai, Shenzhen Guangdong 518129 (CN); ZHANG, Dapeng, Shenzhen Guangdong 518129 (CN); YING, Yunjian, Shenzhen Guangdong 518129 (CN); CHEN, Qiulin, Shenzhen Guangdong 518129 (CN)
(74) Representative: Gill Jennings & Every LLP
(86) International application number: PCT/CN2017/080476
(87) International publication number: WO 2018/082255

(57) **Abstract**

Embodiments of the present invention provide a method for controlling media resource loading, including: listening to a touchscreen sliding event; when the touchscreen sliding event is obtained through the listening, detecting whether a user interface UI (User Interface) inertially scrolls; measuring a speed of the inertial scrolling when it is detected that the UI inertially scrolls; determining whether an initial speed of the inertial scrolling is greater than a first speed threshold; stopping loading a to-be-loaded media resource on the UI when the initial speed is greater than the first speed threshold; and resuming the loading of the to-be-loaded media resource on the UI when the speed of the inertial moving is decreased to be equal to or less than a second speed threshold. In technical solutions of the present invention, media resource loading can be dynamically controlled depending on whether a UI inertial scrolling speed is greater than a preset speed threshold, so that on the premise of ensuring low energy consumption and UI smoothness, a white block problem is avoided and a UI scrolling speed is prevented from being limited, thereby improving user experience.

## Description

### TECHNICAL FIELD

The present invention relates to the communications field, and in particular, to a media resource loading method, an apparatus, and a terminal.

### BACKGROUND

With rapid development of intelligent terminal technologies, intelligent terminals (including a mobile phone, a tablet computer, an intelligent wear device, a set-top box, and the like) have become essential consumer goods in fast-paced life of young people, and a growing quantity of users entertain themselves and work by using the intelligent terminals, for example, browse web pages, microblog, Moments, or Headlines Today.

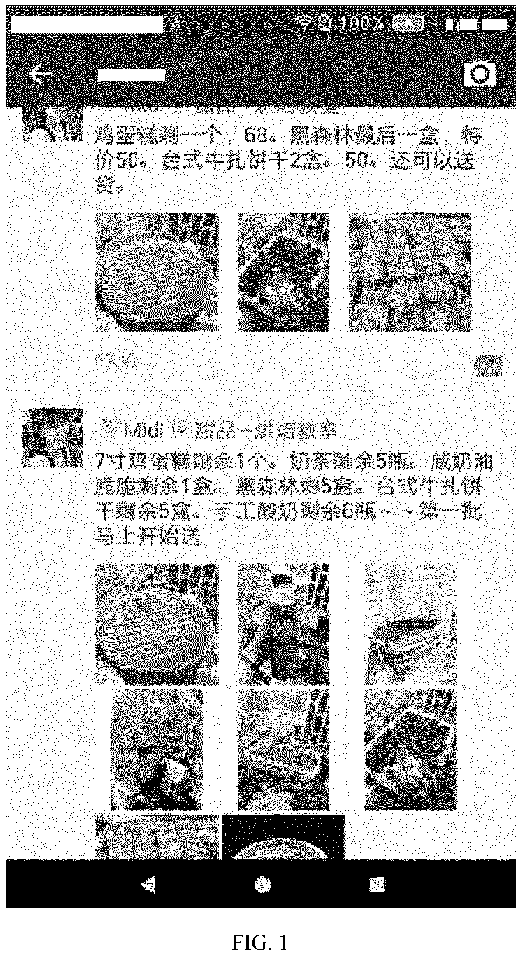

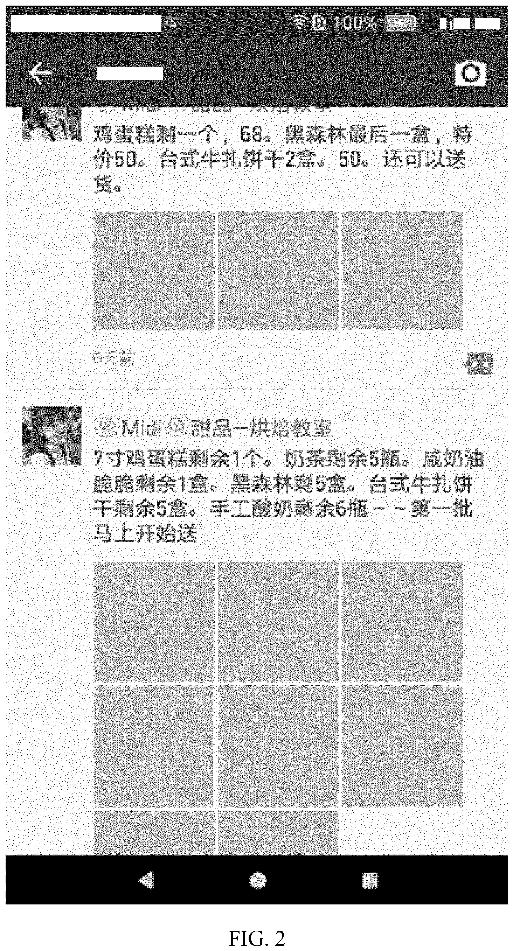

On a terminal running an Android system, when an interface of an application such as microblog, Moments, or Headlines Today is being scrolled, a problem that a white block is displayed in a to-be-loaded media resource window occurs when there is a to-be-loaded media resource (such as a picture or a video) on the application interface. The white block problem means that the to-be-loaded media resource cannot be completely loaded when an application interface is being scrolled, and is replaced with a default background (usually a solid color). As shown in FIG. 1 and FIG. 2, FIG. 1 shows a normal effect, and FIG. 2 shows a display effect of an application interface when the application interface is being scrolled. In FIG. 2, no picture is normally displayed, in other words, the white block problem occurs. The white block problem occurs on the terminal running the Android system, because a loading control mechanism of the Android system is that a UI (User Interface) thread and a picture thread are asynchronous, in other words, UI displaying and media resource loading are independent from each other. The UI thread and the media resource loading thread being asynchronous is for ensuring smoothness of the UI thread, specifically: the media resource loading is usually stopped when the application interface is being scrolled, and the loading is resumed when the scrolling is stopped.

Relatively, a loading control mechanism of a terminal running an IOS system is that a same thread is used for UI displaying and media resource loading, in other words, the UI displaying and the media resource loading are synchronously performed as long as an application interface is being scrolled. To ensure smoothness of UI scrolling, the IOS system limits a speed of the UI scrolling to reduce a quantity of to-be-loaded media resources on a UI. Because the loading control mechanism of the IOS system limits the speed of the scrolling, user experience is affected.

### SUMMARY

To resolve the foregoing technical problem, the present invention provides a method for controlling media resource loading, and a terminal. In the present invention, whether to load a media resource is dynamically controlled based on a type and a speed of scrolling of a user interface UI (User Interface), so that on the premise of ensuring low energy consumption and UI smoothness, a UI white block problem can be avoided, thereby improving user experience.

A first aspect provides a method for controlling media resource loading, where the method includes: listening to a touchscreen sliding event, where the touchscreen sliding event is the touchscreen sliding event is user interface UI (User Interface) scrolling triggered by a touch sliding operation on a touchscreen; if the touchscreen sliding event is obtained through the listening, detecting whether a current UI inertially scrolls, where there is no touch point on the touchscreen during the inertial scrolling, and a speed of the inertial scrolling is progressively decreased along with scrolling time; measuring the speed of the inertial scrolling when it is detected that the current UI inertially scrolls; and temporarily stopping loading a to-be-loaded media resource on the current UI when a measured initial speed of the inertial scrolling is greater than or equal to a first speed threshold.

With reference to the first aspect, in a first possible implementation of the first aspect, after the temporarily stopping loading a to-be-loaded media resource on the current UI, the method further includes: loading the to-be-loaded media resource on the current UI when the speed of the inertial moving is decreased to be equal to or less than a second speed threshold.

With reference to the first aspect or the first possible implementation of the first aspect, in a second possible implementation of the first aspect, the temporarily stopping loading a to-be-loaded media resource on the current UI includes: determining whether the to-be-loaded media resource on the current UI is a slow media resource, where a time consumed in loading the slow media resource is greater than a time consumed in loading a non-slow media resource; and stopping loading the media resource on the current UI if the media resource on the current UI is a slow media resource.

With reference to the second possible implementation of the first aspect, in a third possible implementation of the first aspect, the method includes: loading the to-be-loaded media resource on the current UI if the to-be-loaded media resource on the current UI is a non-slow media resource.

With reference to the second possible implementation of the first aspect or the third possible implementation of the first aspect, in a fourth possible implementation of the first aspect, the slow media resource includes at least one of the following media resources: a video, a picture whose resolution exceeds a preset threshold, and media data that needs to be remotely obtained.

With reference to the first aspect or the first possible implementation of the first aspect or the second possible implementation of the first aspect or the third possible implementation of the first aspect or the fourth possible implementation of the first aspect, in a fifth possible implementation of the first aspect, the if the touchscreen sliding event is obtained through the listening, detecting whether a current UI inertially scrolls includes: determining, by detecting whether there is a touch point on the touchscreen, whether the current UI inertially scrolls, where the current UI inertially scrolls if no touch point is detected on the touchscreen; or the current UI non-inertially scrolls if a touch point is detected on the touchscreen.

With reference to the first aspect or the first possible implementation of the first aspect or the second possible implementation of the first aspect or the third possible implementation of the first aspect or the fourth possible implementation of the first aspect or the fifth possible implementation of the first aspect, in a sixth possible implementation of the first aspect, the initial speed is a speed of the current UI when the touch point on the touchscreen disappears.

With reference to the first aspect or the first possible implementation of the first aspect or the second possible implementation of the first aspect or the third possible implementation of the first aspect or the fourth possible implementation of the first aspect or the fifth possible implementation of the first aspect or the sixth possible implementation of the first aspect, in a seventh possible implementation of the first aspect, the first speed threshold is equal to the second speed threshold.

With reference to the first aspect or the first possible implementation of the first aspect or the second possible implementation of the first aspect or the third possible implementation of the first aspect or the fourth possible implementation of the first aspect or the fifth possible implementation of the first aspect or the sixth possible implementation of the first aspect, in an eighth possible implementation of the first aspect, the first speed threshold is greater than the second speed threshold.

With reference to the first aspect or the first possible implementation of the first aspect or the second possible implementation of the first aspect or the third possible implementation of the first aspect or the fourth possible implementation of the first aspect or the fifth possible implementation of the first aspect or the sixth possible implementation of the first aspect or the seventh possible implementation of the first aspect or the eighth possible implementation of the first aspect, in a ninth possible implementation of the first aspect, the first speed threshold is 12000 pixels/s.

With reference to the first possible implementation of the first aspect or the second possible implementation of the first aspect or the third possible implementation of the first aspect or the fourth possible implementation of the first aspect or the fifth possible implementation of the first aspect or the sixth possible implementation of the first aspect or the seventh possible implementation of the first aspect or the eighth possible implementation of the first aspect, in a tenth possible implementation of the first aspect, the second speed threshold is 8000 pixels/s.

A second aspect provides a terminal, where the terminal includes: a listening module, a first detection module, a speed measurement module, a first determining module, and a control module, where
the listening module is configured to listen to a touchscreen sliding event, where the touchscreen sliding event is user interface UI (User Interface) scrolling triggered by a touch sliding operation on a touchscreen;
the first detection module is configured to: if the touchscreen sliding event is obtained by the listening module through the listening, detect whether a current UI inertially scrolls, where there is no touch point on the touchscreen during the inertial scrolling, and a speed of the inertial scrolling is progressively decreased along with scrolling time;
the speed measurement module is configured to measure the speed of the inertial scrolling when the first detection module detects that the current UI inertially scrolls;
the first determining module is configured to determine whether an initial speed, measured by the speed measurement module, of the inertial scrolling is greater than or equal to a first speed threshold; and
the control module is configured to temporarily stop loading a to-be-loaded media resource on the current UI when the first determining module determines that the initial speed is greater than or equal to the first speed threshold.

With reference to the second aspect, in a first possible implementation of the second aspect, the terminal further includes a second determining module; and
the second determining module is configured to: after the control module temporarily stops loading the to-be-loaded media resource on the current UI, determine whether the speed, measured by the speed measurement module, of the inertial scrolling is decreased to be equal to or less than a second speed threshold.

With reference to the first possible implementation of the second aspect, in a second possible implementation of the second aspect, the control module is further configured to resume the loading of the to-be-loaded media resource on the current UI when the second determining module determines that the speed of the inertial scrolling is decreased to be equal to or less than the second speed threshold.

With reference to the second aspect or the first possible implementation of the second aspect or the second possible implementation of the second aspect, in a third possible implementation of the second aspect, the first speed threshold is 12000 pixels/s.

With reference to the first possible implementation of the second aspect or the second possible implementation of the second aspect or the third possible implementation of the second aspect, in a fourth possible implementation of the second aspect, the second speed threshold is 8000 pixels/s.

A third aspect provides a terminal, where the terminal includes: a listening module, a first detection module, a second detection module, a speed measurement module, a first determining module, and a control module, where
the listening module is configured to listen to a touchscreen sliding event, where the touchscreen sliding event is user interface UI (User Interface) scrolling triggered by a touch sliding operation on a touchscreen;
the first detection module is configured to: if the touchscreen sliding event is obtained by the listening module through the listening, detect whether a current UI inertially scrolls, where there is no touch point on the touchscreen during the inertial scrolling, and a speed of the inertial scrolling is progressively decreased along with scrolling time;
the speed measurement module is configured to measure the speed of the inertial scrolling when the first detection module detects that the current UI inertially scrolls;
the first determining module is configured to determine whether an initial speed, measured by the speed measurement module, of the inertial scrolling is greater than or equal to a first speed threshold;
the second detection module is configured to: when the first determining module determines that the initial speed is greater than or equal to the first speed threshold, detect whether a to-be-loaded media resource on the current UI is a slow media resource; and
the control module is configured to temporarily stop loading the to-be-loaded media resource on the current UI when the second detection module detects that the to-be-loaded media resource on the current UI is a slow media resource.

With reference to the third aspect, in a first possible implementation of the third aspect, the terminal further includes a second determining module; and
the second determining module is configured to: after the control module temporarily stops loading the to-be-loaded media resource on the current UI, determine whether the speed, measured by the speed measurement module, of the inertial scrolling is decreased to be equal to or less than a second speed threshold.

With reference to the first possible implementation of the third aspect, in a second possible implementation of the third aspect, the control module is further configured to resume the loading of the to-be-loaded media resource on the current UI when the second determining module determines that the speed of the inertial scrolling is decreased to be equal to or less than the second speed threshold.

With reference to the third aspect or the first possible implementation of the third aspect or the second possible implementation of the third aspect, in a third possible implementation of the third aspect, the first speed threshold is 12000 pixels/s.

With reference to the first possible implementation of the third aspect or the second possible implementation of the third aspect or the third possible implementation of the third aspect, in a fourth possible implementation of the third aspect, the second speed threshold is 8000 pixels/s.

A fourth aspect provides a terminal, where the terminal includes: a listening module, a first detection module, a speed measurement module, a first determining module, and a processing module, where the listening module is configured to listen to a touchscreen sliding event; the first detection module is configured to: when the touchscreen sliding event is obtained by the listening module through the listening, detect whether a user interface UI (User Interface) inertially scrolls; the speed measurement module is configured to measure a speed of the inertial scrolling when the first detection module detects that the UI inertially scrolls; the first determining module is configured to determine whether an initial speed, measured by the speed measurement module, of the inertial scrolling is greater than a first speed threshold; and the processing module is configured to stop loading a to-be-loaded media resource on the UI when the first determining module determines that the initial speed is greater than the first speed threshold.

With reference to the fourth aspect, in a first possible implementation of the fourth aspect, the terminal further includes a second determining module; and the second determining module is configured to: after the processing module stops loading the to-be-loaded media resource on the UI, determine whether the speed of the inertial scrolling measured by the speed measurement module is decreased to be equal to or less than a second speed threshold.

With reference to the first possible implementation of the fourth aspect, in a second possible implementation of the fourth aspect, the processing module is further configured to resume the loading of the to-be-loaded media resource on the UI when the second determining module determines that the speed of the inertial scrolling is decreased to be equal to or less than the second speed threshold.

A fifth aspect provides a terminal, where the terminal includes: a touchscreen, a storage module, and a processing module. The touchscreen is configured to: receive a touch behavior that is input, and generate, based on the touch behavior that is input, a corresponding signal input that is related to function control; the storage module is configured to store a programmable instruction; and the processing module is configured to invoke the programmable instruction stored in the storage module, to perform: listening to a touchscreen sliding event; when the touchscreen sliding event is obtained through the listening, detecting whether a user interface UI (User Interface) inertially scrolls; measuring a speed of the inertial scrolling when it is detected that the UI inertially scrolls; determining whether an initial speed of the inertial scrolling is greater than a first speed threshold; and stopping loading a to-be-loaded media resource on the UI when the initial speed is greater than the first speed threshold.

With reference to the fifth aspect, in a first possible implementation of the fifth aspect, the processing module invokes the programmable instruction stored in the storage module, further to resume the loading of the to-be-loaded media resource on the UI when the speed of the inertial moving is decreased to be equal to or less than a second speed threshold.

With reference to the fifth aspect or the first possible implementation of the fifth aspect, in a second possible implementation of the fifth aspect, the processing module invokes the programmable instruction stored in the storage module, further to: if the initial speed is greater than the first speed threshold, detect whether the to-be-loaded media resource is a slow media resource; and stop loading the media resource on the UI when it is detected that the to-be-loaded media resource is a slow media resource; keep loading the to-be-loaded media resource on the UI when it is detected that the to-be-loaded media resource is a non-slow media resource.

In the embodiments of the present invention, a media resource loading behavior is dynamically controlled based on the inertial scrolling of the user interface UI (User Interface) and whether the scrolling speed is greater than a preset speed threshold, so that on the premise of ensuring the low energy consumption and the UI smoothness, the UI white block problem can be avoided and a UI scrolling speed can be prevented from being limited, thereby improving user experience.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a normal display effect of a UI according to an embodiment of the present invention;
FIG. 2 is a schematic diagram in which a white block problem occurs in UI display according to an embodiment of the present invention;
FIG. 3 is a flowchart of a method for controlling media resource loading according to an embodiment of the present invention;
FIG. 4 is a schematic diagram in which an inertial scrolling speed is monotonically decreased according to an embodiment of the present invention;
FIG. 5 is a schematic logical diagram of a structure of a terminal according to an embodiment of the present invention;
FIG. 6 is a schematic logical diagram of a structure of a terminal according to an embodiment of the present invention; and
FIG. 7 is a schematic logical diagram of a structure of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

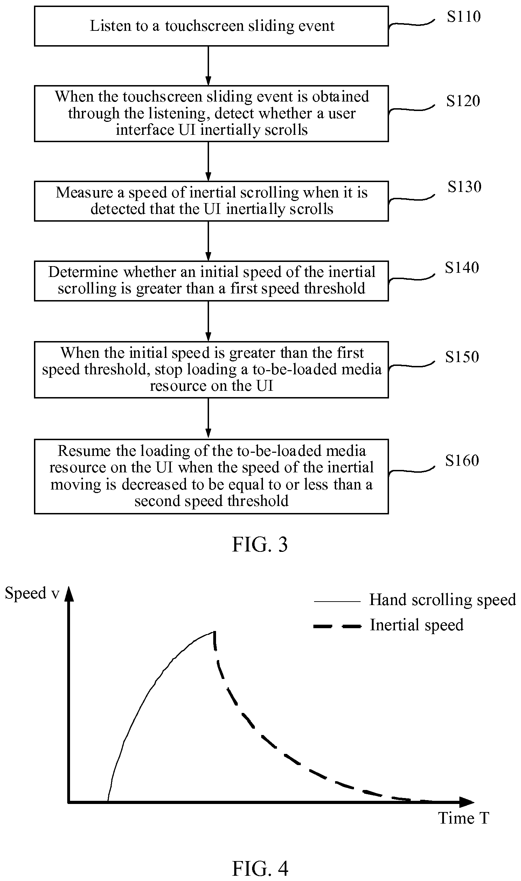

An embodiment of the present invention provides a method for controlling media resource loading. As shown in FIG. 3, the method includes the following steps.

S110: Listen to a touchscreen sliding event, where the touchscreen sliding event refers to an event triggered by a touch sliding operation on a touchscreen. Optionally, a sliding event triggered by a physical key operation is listened to. During specific implementation, a scrolling operation on an application interface may be controlled by sliding on the touchscreen, or may be controlled by a physical key (an up or down arrow key, a volume key, a knob, or the like) operation.

S120: When the touchscreen sliding event is obtained through the listening, detect whether a user interface UI (User Interface) inertially scrolls. Optionally, whether the UI inertially scrolls is detected by detecting whether a touch point exists on the touchscreen, specifically: if it is detected that one or more touch points exist on the touchscreen, it is determined that UI scrolling is non-inertial scrolling, namely, hand scrolling; or if it is detected that no touch point exists on the touchscreen, it is determined that UI scrolling is inertial scrolling. The inertial scrolling refers to application interface scrolling caused by inertia when a user uses a finger to quickly slide on a screen to enable an interface to start scrolling and the interface has a relatively high initial speed after the finger leaves the touchscreen. The hand scrolling refers to application interface scrolling caused by a finger of the user sliding on the screen when the finger does not leave the touchscreen.

S130: Measure a speed of inertial scrolling when it is detected that the UI inertially scrolls. During specific implementation, pixel/s may be used as a speed unit, that is, a distance (pixels) that a UI is scrolled by per second.

S140: Determine whether an initial speed of the inertial scrolling is greater than a first speed threshold. A speed of the inertial scrolling is monotonically decreased to zero, as shown in FIG. 4. Therefore, a maximum speed of the inertial scrolling is the initial speed. During specific implementation, the initial speed of the inertial scrolling is a speed at an instant when the finger of the user leaves the screen after sliding on the screen.

S150: When the initial speed is greater than the first speed threshold, stop loading a to-be-loaded media resource on the UI. Optionally, the media resource usually refers to a picture resource or a video resource, not including a character or a layout. Usually, after the UI scrolling speed reaches a particular numerical value, it is very difficult for the user to identify a media resource on the UI, and there is no essential difference between loading and not loading; on the contrary, energy consumption is increased, affecting smoothness of UI display. When the initial speed of the scrolling is greater than the first speed threshold, stopping loading the to-be-loaded media resource on the UI can reduce the energy consumption and improve the smoothness of the UI display, without reducing user experience. Optionally, the first speed threshold may be selected depending on whether a human eye can identify media resource content during sliding. Optionally, 12000 pixels/s may be selected as the first speed threshold.

The method further includes S160: After the stopping loading a media resource on the UI, the method further includes: resuming the loading of the to-be-loaded media resource on the UI when the speed of the inertial moving is decreased to be equal to or less than a second speed threshold. The loading of the to-be-loaded media resource is stopped because it is difficult for the user to identify the media resource on the UI that is being quickly scrolled. Stopping the loading can reduce the energy consumption and improve the smoothness of the UI display, without reducing user experience. As shown in FIG. 4, the speed of the inertial scrolling is monotonically decreased to zero. In this case, when the speed of the UI scrolling is decreased to a particular speed and the user can identify the media resource on the UI that is being scrolled, the loading of the to-be-loaded media resource needs to be resumed, to improve user experience. Optionally, the second speed threshold may be selected depending on whether a human eye can identify media resource content during sliding. Optionally, 8000 pixels/s may be selected as the second speed threshold. After the speed of the inertial scrolling is decreased to a particular numerical value, resuming the loading of the to-be-loaded media resource can improve user experience.

Optionally, before the stopping loading a to-be-loaded media resource on the UI, the method further includes: when the initial speed is greater than the first speed threshold, further detecting whether the to-be-loaded media resource is a slow media resource; and when it is detected that the to-be-loaded media resource is a slow media resource, stopping loading the to-be-loaded media resource on the UI. In other words, the loading of the to-be-loaded media resource on the UI is stopped only when both a condition that the initial speed is greater than the first speed threshold and a condition that the to-be-loaded media resource is a slow media resource are satisfied. A fast media resource corresponds to the slow media resource. Usually, the fast media resource, such as a local picture with a low resolution, has a very short loading time, consumes a very small quantity of CPU resources, and does not affect the smoothness of the UI display regardless of whether loading of the fast media resource is synchronous or asynchronous with loading of the UI display. Usually, the slow media resource, such as a picture with a high resolution, a video resource, or network data needing to be remotely obtained, has a relatively long loading time and needs to consume relatively many CPU resources; and performance of the UI display is apparently reduced when a large quantity of slow media resources are loaded. During specific implementation, on an Android system, a resource loaded by using an asynchronous thread may be defined as a slow resource, and another resource is defined as a fast resource.

When the to-be-loaded media resource is a resource with a very low resolution and a very fast loading speed, loading can be complete without occupying many resources, the smoothness of the UI display is not affected, and user experience can be further improved.

Optionally, the first speed threshold and the second speed threshold may be equal or not equal. Preferably, the first speed threshold and the second speed threshold are not equal. For example, 12000 pixels/s is selected as the first speed threshold, and 8000 pixels/s is selected as the second speed threshold.

In this embodiment of the present invention, the loading of the media resource is dynamically controlled based on the speed of the UI inertial scrolling and whether the to-be-loaded media resource is a slow media resource, so that on the premise of ensuring low energy consumption and without affecting the UI smoothness, user experience can be improved when the UI inertially scrolls.

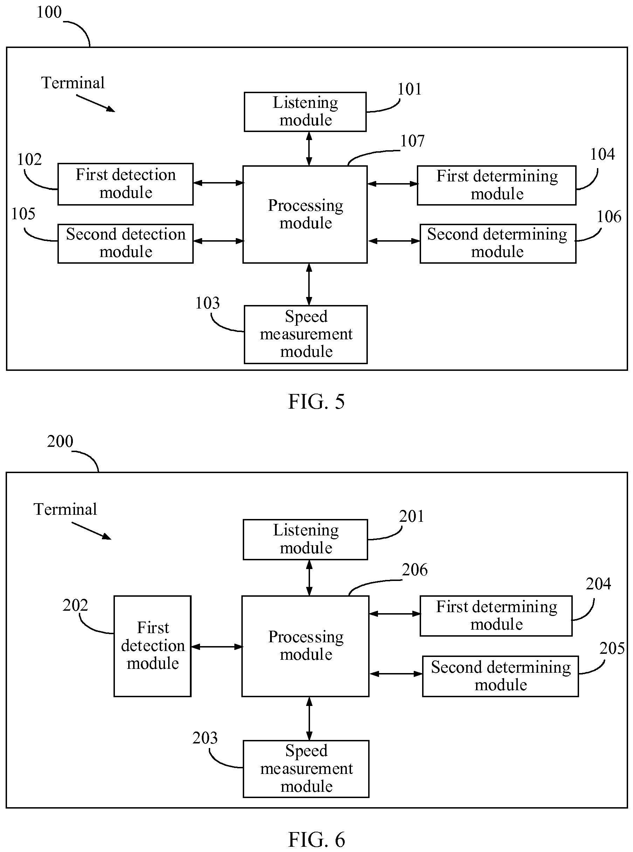

An embodiment of the present invention provides a terminal. As shown in FIG. 5, the terminal 100 includes: a listening module 101, a first detection module 102, a speed measurement module 103, a first determining module 104, a second detection module 105, a second determining module 106, and a processing module 107.

The listening module 101 is configured to listen to a touchscreen sliding event.

The first detection module 102 is configured to: when the touchscreen sliding event is obtained by the listening module 101 through the listening, detect whether a user interface UI (User Interface) inertially scrolls.

The speed measurement module 103 is configured to measure a speed of the inertial scrolling when the first detection module 102 detects that the UI inertially scrolls.

The first determining module 104 is configured to determine whether an initial speed, measured by the speed measurement module 103, of the inertial scrolling is greater than a first speed threshold.

The second detection module 105 is configured to: when the first determining module 104 determines that the initial speed is greater than the first speed threshold, detect whether a to-be-loaded media resource is a slow media resource.

The second determining module 106 is configured to determine whether the speed of the inertial scrolling measured by the speed measurement module 103 in real time is decreased to be equal to or less than a second speed threshold.

The processing module 107 is configured to: stop loading the to-be-loaded media resource on the UI when the second detection module 105 detects that the to-be-loaded media resource is a slow media resource; or resume the loading of the to-be-loaded media resource on the UI when the second determining module 106 determines that the speed of the inertial scrolling is decreased to be equal to or less than the second speed threshold.

It should be noted that, the modules in this embodiment of the present invention are virtual units, may be mutually integrated, and may be implemented by using hardware, may be implemented by using software, or may be implemented by combining hardware and software. During specific implementation, the listening module, the first detection module, the speed measurement module, the first determining module, the second determining module, and the processing module may be integrated into a processing unit.

According to the terminal provided in this embodiment of the present invention, the loading of the media resource is dynamically controlled based on the speed of the UI inertial scrolling and whether the to-be-loaded media resource is a slow media resource, so that on the premise of ensuring low energy consumption and without affecting UI smoothness, user experience can be improved when the UI inertially scrolls.

An embodiment of the present invention provides a terminal. A difference from the foregoing embodiment is that there is no second detection module. As shown in FIG. 6, the terminal 200 includes: a listening module 201, a first detection module 202, a speed measurement module 203, a first determining module 204, a second determining module 205, and a processing module 206.

The listening module 201 is configured to listen to a touchscreen sliding event.

The first detection module 202 is configured to: when the touchscreen sliding event is obtained by the listening module 201 through the listening, detect whether a user interface UI (User Interface) inertially scrolls.

The speed measurement module 203 is configured to measure a speed of the inertial scrolling when the first detection module 202 detects that the UI inertially scrolls.

The first determining module 204 is configured to determine whether an initial speed, measured by the speed measurement module 203, of the inertial scrolling is greater than a first speed threshold.

The second determining module 205 is configured to determine whether the speed of the inertial scrolling measured by the speed measurement module 203 in real time is decreased to be equal to or less than a second speed threshold.

The processing module 206 is configured to: stop loading a to-be-loaded media resource on the UI when the first determining module determines that the initial speed measured by the speed measurement module 203 is greater than the first speed threshold; or resume loading of a to-be-loaded media resource on the UI when the second determining module 205 determines that the speed of the inertial scrolling is decreased to be equal to or less than the second speed threshold.

It should be noted that, the modules in this embodiment of the present invention are virtual units, may be mutually integrated, and may be implemented by using hardware, may be implemented by using software, or may be implemented by combining hardware and software. During specific implementation, the listening module, the first detection module, the speed measurement module, the first determining module, the second determining module, and the processing module may be integrated into a processing unit.

According to the terminal provided in this embodiment of the present invention, the loading of the media resource is dynamically controlled based on the speed of the UI inertial scrolling and whether the to-be-loaded media resource is a slow media resource, so that on the premise of ensuring low energy consumption and without affecting UI smoothness, user experience can be improved when the UI inertially scrolls.

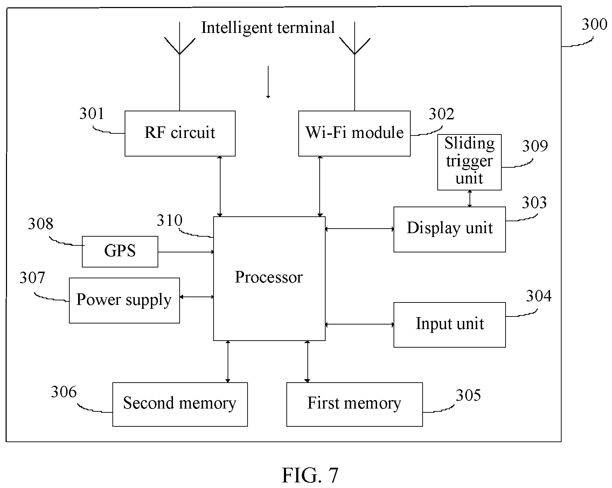

An embodiment of the present invention provides a terminal. As shown in FIG. 7, the terminal 300 includes hardware modules such as an RF circuit 301, a Wi-Fi module 302, a display unit 303, an input unit 304, a first memory 305, a second memory 306, a power supply 307, a GPS module 308, a sliding trigger unit 309, and a processor 310. The terminal 300 may be a mobile phone, a tablet computer, a PDA (Personal Digital Assistant, personal digital assistant), an in-vehicle computer, a set-top box, or the like.

The RF circuit 301 is configured to receive and send a communication signal.

The Wi-Fi module 302 is configured to connect to a network and scan a network signal. The RF circuit 301 and/or the Wi-Fi module 302 may be in contact with a radio base station, to obtain a current location coordinate of the intelligent terminal.

The display unit 303 is configured to display a user interaction interface. The display unit 303 may be configured to display information entered by a user or information provided to the user and various menu interfaces of the intelligent terminal. The display unit 303 may include a display panel. Optionally, the display panel may be configured by using an LCD (Liquid Crystal Display, liquid crystal display), an OLED (Organic Light-Emitting Diode, organic light-emitting diode), or the like. During specific implementation, the touch panel covers the display panel, to form a touch display screen to be used as the sliding trigger unit 309 of the terminal 300, and the processor 310 provides a corresponding visual output on the touch display screen according to a type of a touch event.

The input unit 304 may be configured to: receive inputted digital or character information, receive an operation of the user of switching an application programming interface, generate a switching signal, and generate a signal input related to a user setting and function control of the terminal. Specifically, in this embodiment of the present invention, the input unit 304 may include the touch panel, which is also referred to as a touchscreen, and may collect a touch operation of a user on or near the touch panel (such as an operation of a user on the touch panel by using any suitable object or accessory such as a finger or a stylus). The touch panel may be implemented by using a type such as a resistive, capacitive, infrared, or surface sound wave type. In addition to the touch panel, the input unit 304 may include another input device, including but not limited to, one or more of a physical keyboard, a functional key (such as a volume control key or a switch key), a track ball, a mouse, and a joystick.

The first memory 305 stores information about a preset quantity of APPs and interfaces of the terminal. It may be understood that the second memory 306 may be an external memory of the terminal 300, and the first memory 305 may be an internal memory of the intelligent terminal. The first memory 305 may be one of an NVRAM nonvolatile random access memory, a DRAM dynamic random access memory, a SRAM static random access memory, a Flash flash memory, or the like. An operating system running on the intelligent terminal is generally installed on the first memory 305. The second memory 306 may be a hard disk, a compact disc, a USB flash drive, a floppy disk, a tape drive, a cloud server, or the like. Optionally, at present, some APPs of a third party may be installed on the second memory 306.

The power supply 307 may supply power for the entire terminal, and includes lithium batteries of various types.

The GPS module 308 is configured to obtain a location coordinate of the intelligent terminal.

The sliding trigger unit 309 is configured to trigger UI scrolling. During specific implementation, the sliding trigger unit is a touchscreen integrated in the display unit 303.

The processor 310 is a control center of the intelligent terminal, and is connected to various parts of the terminal by using various interfaces and lines. By running or executing a software program and/or module stored in the first memory 305, and invoking data stored in the second memory 306, the processor 310 performs various functions and data processing of the intelligent terminal. Optionally, the processor 310 may include one or more processing units.

Further, the processor 310 invokes the program stored in the first memory 305 and the data stored in the second memory 306, to: listen to a touchscreen sliding event; when the touchscreen sliding event is obtained through the listening, detect whether a user interface UI (User Interface) inertially scrolls; measure a speed of the inertial scrolling when it is detected that the UI inertially scrolls; determine whether an initial speed of the inertial scrolling is greater than a first speed threshold; and stop loading a to-be-loaded media resource on the UI when the initial speed is greater than the first speed threshold.

Further, the processing module 310 invokes the program stored in the first memory 305 and the data stored in the second memory 306, further to resume the loading of the to-be-loaded media resource on the UI when the speed of the inertial moving is decreased to be equal to or less than a second speed threshold.

Further, the processing module 310 invokes the program stored in the first memory 305 and the data stored in the second memory 306, further to: if the initial speed is greater than the first speed threshold, detect whether the to-be-loaded media resource is a slow media resource; and stop loading the media resource on the UI when it is detected that the to-be-loaded media resource is a slow media resource; keep loading the to-be-loaded media resource on the UI when it is detected that the to-be-loaded media resource is a non-slow media resource.

In this embodiment of the present invention, a media resource loading behavior is dynamically controlled based on the inertial scrolling of the user interface UI (User Interface) and whether the scrolling speed is greater than a preset speed threshold; further, when it is determined that the scrolling speed is greater than the preset speed threshold, the media resource loading is further dynamically controlled by detecting whether the to-be-loaded media resource is a slow media resource, so that on the premise of ensuring low energy consumption and UI smoothness, a UI white block problem can be avoided and a UI scrolling speed can be prevented from being limited, thereby improving user experience.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for controlling media resource loading, comprising:
listening to a touchscreen sliding event, wherein the touchscreen sliding event is user interface UI (User Interface) scrolling triggered by a touch sliding operation on a touchscreen;
if the touchscreen sliding event is obtained through the listening, detecting whether a current UI inertially scrolls, wherein there is no touch point on the touchscreen during the inertial scrolling, and a speed of the inertial scrolling is progressively decreased along with scrolling time;
measuring the speed of the inertial scrolling when it is detected that the current UI inertially scrolls; and
temporarily stopping loading a to-be-loaded media resource on the current UI when a measured initial speed of the inertial scrolling is greater than or equal to a first speed threshold.

2. The method according to claim 1, wherein after the temporarily stopping loading a to-be-loaded media resource on the current UI, the method further comprises:
loading the to-be-loaded media resource on the current UI when the speed of the inertial moving is decreased to be equal to or less than a second speed threshold.

3. The method according to claim 1 or 2, wherein the temporarily stopping loading a to-be-loaded media resource on the current UI comprises:
determining whether the to-be-loaded media resource on the current UI is a slow media resource, wherein a time consumed in loading the slow media resource is greater than a time consumed in loading a non-slow media resource; and
stopping loading the media resource on the current UI if the media resource on the current UI is a slow media resource.

4. The method according to claim 3, wherein the method further comprises:
loading the to-be-loaded media resource on the current UI if the to-be-loaded media resource on the current UI is a non-slow media resource.

5. The method according to claim 3 or 4, wherein the slow media resource comprises at least one of the following media resources:
a video, a picture whose resolution exceeds a preset threshold, and media data that needs to be remotely obtained.

6. The method according to any one of claims 1 to 5, wherein the if the touchscreen sliding event is obtained through the listening, detecting whether a current UI inertially scrolls comprises:
determining, by detecting whether there is a touch point on the touchscreen, whether the current UI inertially scrolls, wherein
the current UI inertially scrolls if no touch point is detected on the touchscreen; or
the current UI non-inertially scrolls if a touch point is detected on the touchscreen.

7. The method according to any one of claims 1 to 6, wherein the initial speed is a speed of the current UI when the touch point on the touchscreen disappears.

8. The method according to any one of claims 1 to 7, wherein the first speed threshold is equal to the second speed threshold.

9. The method according to any one of claims 1 to 7, wherein the first speed threshold is greater than the second speed threshold.

10. The method according to any one of claims 1 to 9, wherein the first speed threshold is 12000 pixels/s.

11. The method according to any one of claims 2 to 9, wherein the second speed threshold is 8000 pixels/s.

12. A terminal, comprising: a listening module, a first detection module, a speed measurement module, a first determining module, and a control module, wherein
the listening module is configured to listen to a touchscreen sliding event, wherein the touchscreen sliding event is user interface UI (User Interface) scrolling triggered by a touch sliding operation on a touchscreen;
the first detection module is configured to: if the touchscreen sliding event is obtained by the listening module through the listening, detect whether a current UI inertially scrolls, wherein there is no touch point on the touchscreen during the inertial scrolling, and a speed of the inertial scrolling is progressively decreased along with scrolling time;
the speed measurement module is configured to measure the speed of the inertial scrolling when the first detection module detects that the current UI inertially scrolls;
the first determining module is configured to determine whether an initial speed, measured by the speed measurement module, of the inertial scrolling is greater than or equal to a first speed threshold; and
the control module is configured to temporarily stop loading a to-be-loaded media resource on the current UI when the first determining module determines that the initial speed is greater than or equal to the first speed threshold.

13. The terminal according to claim 12, further comprising a second determining module, wherein
the second determining module is configured to: after the control module temporarily stops loading the to-be-loaded media resource on the current UI, determine whether the speed, measured by the speed measurement module, of the inertial scrolling is decreased to be equal to or less than a second speed threshold.

14. The terminal according to claim 13, wherein the control module is further configured to resume the loading of the to-be-loaded media resource on the current UI when the second determining module determines that the speed of the inertial scrolling is decreased to be equal to or less than the second speed threshold.

15. The terminal according to any one of claims 12 to 14, wherein the first speed threshold is 12000 pixels/s.

16. The termina according to any one of claims 13 to 15, wherein the second speed threshold is 8000 pixels/s.

17. A terminal, comprising: a listening module, a first detection module, a second detection module, a speed measurement module, a first determining module, and a control module, wherein
the listening module is configured to listen to a touchscreen sliding event, wherein the touchscreen sliding event is user interface UI (User Interface) scrolling triggered by a touch sliding operation on a touchscreen;
the first detection module is configured to: if the touchscreen sliding event is obtained by the listening module through the listening, detect whether a current UI inertially scrolls, wherein there is no touch point on the touchscreen during the inertial scrolling, and a speed of the inertial scrolling is progressively decreased along with scrolling time;
the speed measurement module is configured to measure the speed of the inertial scrolling when the first detection module detects that the current UI inertially scrolls;
the first determining module is configured to determine whether an initial speed, measured by the speed measurement module, of the inertial scrolling is greater than or equal to a first speed threshold;
the second detection module is configured to: when the first determining module determines that the initial speed is greater than or equal to the first speed threshold, detect whether a to-be-loaded media resource on the current UI is a slow media resource; and
the control module is configured to temporarily stop loading the to-be-loaded media resource on the current UI when the second detection module detects that the to-be-loaded media resource on the current UI is a slow media resource.

18. The terminal according to claim 17, further comprising a second determining module, wherein
the second determining module is configured to: after the control module temporarily stops loading the to-be-loaded media resource on the current UI, determine whether the speed, measured by the speed measurement module, of the inertial scrolling is decreased to be equal to or less than a second speed threshold.

19. The terminal according to claim 18, wherein the control module is further configured to resume the loading of the to-be-loaded media resource on the current UI when the second determining module determines that the speed of the inertial scrolling is decreased to be equal to or less than the second speed threshold.

20. The terminal according to any one of claims 17 to 19, wherein the first speed threshold is 12000 pixels/s.

21. The terminal according to any one of claims 18 to 20, wherein the second speed threshold is 8000 pixels/s.
